# EUROPÄISCHE PATENTANMELDUNG

(11) **EP 2 672 461 A1**
(43) Veröffentlichungstag der Anmeldung: **11.12.2013**
(21) Anmeldenummer: 12170858.0
(22) Anmeldetag: 05.06.2012
(51) Int. Cl.: G06T 19/20, A61C 13/00

(54) **Verfahren zum Fortsetzen von Aufnahmen zum Erfassen von dreidimensionalen Geometrien von Objekten**

(71) Anmelder: a.tron3d GmbH, 9020 Klagenfurt am Wörthersee (AT)
(72) Erfinder: Jesenko, Juergen, 9161 Maria Rain (AT); Horst, Koinig, 9020 Klagenfurt (AT)
(74) Vertreter: Beer & Partner Patentanwälte KG

(57) **Zusammenfassung**

Verfahren zum Aufnehmen wenigstens eines Teilbereiches einer dreidimensionalen Geometrie wenigstens eines Objektes, zum Zweck der Aktualisierung einer bereits vorhandenen virtuellen dreidimensionalen Geometrie des Teilbereiches, gegebenenfalls nachdem im Teilbereich befindliche Elemente des Objektes verändert, entfernt und/oder hinzugefügt wurden, wobei das Verfahren folgende Schritte beinhaltet:
a) zur Verfügung stellen der vorhandenen virtuellen dreidimensionalen Geometrie des Objektes, beispielsweise aus einer früheren Aufnahme,
b) Aufnahme von zweidimensionalen Bildern aus welchen räumliche Informationen der dreidimensionalen Geometrie des Objektes gewonnen werden,
c) automatisches Hinzufügen von gewonnenen räumlichen Informationen gegebenenfalls bereits vorhandenenden räumlichen Informationen,
d) Aktualisieren der vorhandenen virtuellen dreidimensionalen Geometrie des Teilbereiches des Objektes aufgrund von hinzugefügten Informationen
e) gegebenenfalls Wiederholen des Vorgangs ab Schritt b).

## Beschreibung

Die Erfindung betrifft ein Verfahren zum Aufnehmen wenigstens eines Teilbereiches einer dreidimensionalen Geometrie wenigstens eines Objektes, insbesondere eines Zahnes und/oder eines in den Mundraum gebrachten, organischen und/oder anorganischen Gebildes, beispielsweise eines Zahnimplantates, zum Zweck der Aktualisierung einer bereits vorhandenen virtuellen dreidimensionalen Geometrie des Teilbereiches, gegebenenfalls nachdem im Teilbereich befindliche Elemente des Objektes verändert, entfernt und/oder hinzugefügt wurden.

Methoden zum optischen Erfassen dreidimensionaler Geometrien sind aus dem Stand der Technik, beispielsweise aus der AT 508 563 A, bekannt. Ein Problem ergibt sich allerdings dann, wenn eine, beispielsweise aus einer früheren Aufnahme stammende, dreidimensionale virtuelle Geometrie ergänzt oder geändert werden soll, beispielsweise nach Veränderungen des Objektes, die z.B. im Rahmen einer Zahnbehandlung entstanden sein können.

Bisher wird dieses Problem lediglich umgangen, indem eine völlig neue Aufnahme gemacht wird, deren Daten zunächst für sich stehen. Erst in späteren Verfahrensschritten wird diese neue Aufnahme dann über die vorhandene gelegt oder an diese "angenäht". Dieser Vorgang verursacht Ungenauigkeiten und kann zum Teil nur offline also nicht während der Aufnahme selbst, durchgeführt bzw. berechnet werden.

Ziel der Erfindung ist es daher ein Verfahren zur Verfügung zu stellen, das die oben genannten Nachteile überwindet.

Gelöst wird diese Aufgabe durch ein Verfahren mit den Merkmalen des Anspruchs 1.

Alternativ wird diese Aufgabe gelöst durch ein Verfahren mit den Merkmalen des Anspruchs 2.

Bei diesen wird zunächst die bereits vorhandene, virtuelle dreidimensionale Geometrie zur Verfügung gestellt. Das zur Verfügung Stellen erfolgt dabei, unabhängig von einer Visualisierung, in Form von bisher von der Oberflächengeometrie des Objektes vorhandenen Daten, beispielsweise in Form von n-Tupeln. Die bereits vorhandene, virtuelle dreidimensionale Geometrie steht also nicht wie in den bekannten Umgehungslösungen separat, sondern ist vielmehr die Basis der neu zu erfassenden bzw. zu aktualisierenden virtuellen dreidimensionalen Geometrie. Verfahren, bei denen die virtuelle dreidimensionale Geometrie nicht in n-Tupeln sondern anderen volumetrischen oder nichtvolumetrischen Daten zur Verfügung gestellt wird, sind ebenfalls denkbar.

Das zur Verfügung Stellen kann dabei sowohl das Aufrufen einer Datei als auch den Zugriff auf bereits geladene Daten darstellen, beispielsweise nach einer gewollten oder ungewollten kurzen Unterbrechung einer Aufnahme.

Nachdem die virtuelle dreidimensionale Geometrie zur Verfügung gestellt wurde, werden wenigstens zwei zweidimensionale Bilder aufgenommen, aus denen räumliche Informationen über die dreidimensionale Geometrie gewonnen werden. Dies kann beispielsweise geschehen, indem, wie gemäß einer bevorzugten Ausführungsform vorgeschlagen, die Bilder als Sets von Bildern aufgenommen werden, wobei ein Set von Bildern jeweils aus wenigstens zwei überwiegend überlappenden Aufnahmen eines gleichen Aufnahmebereiches besteht. So können beispielsweise Disparitäten ermittelt werden, welche die räumlichen Informationen liefern. Andere aus dem Stand der Technik bekannte Methoden, bei denen aus zweidimensionalen Bildern räumliche Informationen gewonnen werden können, sind ebenfalls denkbar, wobei die Art, wie die räumlichen Informationen gewonnen werden, für das erfindungsgemäße Verfahren nicht wichtig ist.

Alternativ kann daher auch ein Bild aufgenommen werden, während gleichzeitig ein bekanntes Muster projiziert wird. Ist ein projiziertes Muster bekannt, lassen sich aus der Verzerrung, die bei der Projektion auf eine nicht ebene Fläche entsteht, räumliche Informationen gewinnen.

Die räumlichen Informationen, die durch die beiden alternativen erfindungsgemäßen Verfahrensschritte gewonnenen wurden, werden dann automatisch in die bereits vorhandene virtuelle dreidimensionale Geometrie eingefügt. Dies kann mit einer einfachen Plausibilitätsabfrage erfolgen, bei der die neu gewonnenen räumlichen Informationen, insbesondere Charakteristika, wie beispielsweise die Krümmung der Oberfläche oder Abstände von Raumpunkten, mit denen der vorhandenen virtuellen dreidimensionalen Geometrie verglichen werden.

Dieser Prozess kann gemäß einer bevorzugten Ausführungsform der Erfindung beschleunigt werden, indem in einer Visualisierung der vorhandenen virtuellen dreidimensionalen Geometrie eine manuelle Auswahl des zu aktualisierenden Teilbereiches erfolgt, da sich so die Menge der zu vergleichenden n-Tupel, insbesondere Volumenpunkte bzw. Voxel, verringert.

Nach dem Hinzufügen wird die virtuelle dreidimensionale Geometrie aktualisiert. Es wird also nicht wie bisher eine vollkommen neue, separate Geometrie mit späterer Annäherung erstellt, sondern der vorhandenen werden zusätzliche Informationen hinzugefügt. Da es mathematisch nachweisbar ist, dass mehr Informationen zu einem Voxel auch die Genauigkeit des Voxels erhöhen, wird durch das Hinzufügen der Informationen, im Gegensatz zu einem "Annähen" oder Überlagern, also keine Ungenauigkeit geschaffen sondern sogar die Genauigkeit der bisher vorhandenen virtuellen dreidimensionalen Geometrie erhöht.

Wurde durch die erste Aufnahme von Bildern noch nicht der gesamte zu aktualisierende Teilbereich erfasst bzw. aktualisiert, kann das Verfahren ab dem Aufnehmen so oft wiederholt werden bis der gesamte zu aktualisierende Teilbereich erfasst bzw. aktualisiert wurde.

Gemäß einer bevorzugten Ausführungsform der Erfindung kann die zur Verfügung gestellte, vorhandene, virtuelle dreidimensionale Geometrie mittels eines für den Nutzer einfach auslesbaren Mediums, beispielsweise eines Bildschirms, visualisiert werden. Die Daten werden also beispielsweise mittels der bekannten Methode des Ray-Castings in eine Repräsentation der Daten umgewandelt. Ein einfach auslesbares Medium kann dabei neben dem bereits erwähnten Bildschirm beispielsweise auch ein Hologramm sein.

In einer bevorzugten Ausführungsform der Erfindung kann die Darstellung auch auf einem 3D-Bildschirm erfolgen. So hat der Nutzer unter Zuhilfenahme einer entsprechenden 3D-Brille eine tatsächliche dreidimensionale Wahrnehmung der visualisierten Daten.

Analog kann dazu gemäß einer weiteren bevorzugten Ausführungsform der Erfindung im Anschluss an das Aktualisieren der virtuellen dreidimensionalen Geometrie die aktualisierte virtuelle dreidimensionale Geometrie visualisiert werden.

Gemäß einer ganz besonders bevorzugten Ausführungsform der Erfindung erfolgen dabei sowohl das Hinzufügen als auch das Visualisieren im Wesentlichen in Echtzeit. Zwischen dem Beginn der Aufnahme zur Aktualisierung und der Visualisierung der aktualisierten virtuellen dreidimensionalen Geometrie liegt also ein für den Nutzer nicht wahrnehmbarer Zeitraum. Die Vorgänge werden als im Wesentlichen gleichzeitig wahrgenommen.

In einer weiteren bevorzugten Ausführungsform der Erfindung enthält die Visualisierung Informationen zu einer Genauigkeit der erfassten virtuellen dreidimensionalen Geometrie. Da sich die Genauigkeit der virtuellen dreidimensionalen Geometrie, bzw. der einzelnen Voxel durch die Zahl der zur Verfügung stehenden Informationen erhöht, können beispielsweise Bereiche entsprechend der Menge an Informationen eingefärbt werden. Ein einfaches und intuitiv zu erfassendes Beispiel hierfür wäre ein Farbverlauf von Rot-Gelb-Grün, wobei sich bei steigender Zahl an Informationen pro Volumenpunkt dieser langsam von Rot nach Grün verfärbt.

Zusätzlich oder alternativ können der Visualisierung optische Hinweise zu empfehlenswerten Verbesserungen der Aufnahme für eine Bedienungsperson hinzugefügt werden, beispielsweise Richtungsangaben. So kann der Nutzer beispielsweise mit einem Pfeil aufgefordert werden, von einem bestimmten Bereich weitere Aufnahmen zu machen um eine höhere Genauigkeit zu erreichen.

Gemäß einer bevorzugten Ausführungsform der Erfindung werden die Sets von Bildern stereometrisch aufgenommen. Ein Set von Bildern wird dabei gleichzeitig aus wenigstens zwei versetzt zueinander angeordneten Kameras aufgenommen, die auf einen im wesentlichen gleichen Aufnahmebereich ausgerichtet sind.

Dadurch kann vor allem Zeit eingespart werden. Zum Einen dadurch dass zwischen der Aufnahme der einzelnen Bilder keine Zeit vergeht, da diese gleichzeitig gemacht werden. Zum Anderen sind bei stereometrischen Aufnahmen für die Ermittlung räumlicher Informationen wichtige Eckdaten, wie die Ausrichtung und Position der Kameras zueinander, bekannt und unveränderlich und müssen daher weder ermittelt noch bei einer Berechnung als variabel mitberechnet werden.

Gemäß einer weiteren bevorzugten Ausführungsform der Erfindung können abhängig vom Aufnahmebereich eines Gerätes zum Aufnehmen der Bilder, insbesondere der Sets von Bildern, akustische Signale zur Genauigkeit der erfassten virtuellen dreidimensionalem Geometrie gegeben werden. So kann beispielsweise während ein Bereich aufgenommen wird, über den bereits viele Informationen vorhanden sind, ein hoher Ton erklingen und während ein Bereich aufgenommen wird, von dem für eine gewünschte Genauigkeit noch nicht genügend Aufnahmen vorhanden sind ein tiefer Ton.

Gemäß einer bevorzugten Ausführungsform der Erfindung wird wenigstens während der Aufnahme ein Muster auf den Teilbereich projiziert. Dies kann ein Zufallsmuster, das aus zufällig verteilten, gegebenenfalls unregelmäßig geformten,
Punkten und/oder Linien besteht, oder ein regelmäßiges Muster, beispielsweise ein Streifenmuster, sein. Die Projektion von Mustern vereinfacht die Ermittlung von räumlichen Informationen. Die Projektion sollte dabei jedenfalls während der Aufnahme erfolgen, es kann aber auch schon vor und/oder noch nach der Aufnahme projiziert werden.

Unter einen Zufallsmuster wird dabei ein Muster verstanden, das so wenige Wiederholungen wie möglich aufweist, also explizit ungeordnet ist. Es kann dabei bei jeder Aufnahme das selbe Zufallsmuster projiziert werden. Ein Zufallsmuster bekannt oder unbekannt sein.

Gemäß einer weiteren bevorzugten Ausführungsform der Erfindung wird die aktualisierte virtuelle dreidimensionale Geometrie in ein Open Source Format, beispielsweise STL, umgewandelt. Dadurch können die Daten einfach an Dritte, beispielsweise ein Dentallabor, weitergegeben werden. Dies kann direkt, beispielsweise über eine Internetverbindung, oder indirekt mittels eines Datenträges, beispielsweise einer CD oder eines USB-Sticks erfolgen.

Ausführungsformen, bei denen die ermittelte virtuelle dreidimensionale Geometrie ohne eine Umwandlung in ein anderes Format beispielsweise von einer Maschine zum Fräsen von prothetischen Dentalelementen direkt weiterverwendet wird, sind ebenso denkbar. So kann beispielsweise, nachdem die genauen Formen einer Zahnpräparation aufgenommen wurden, eine passende Krone gefertigt werden.

Gemäß einer zusätzlichen Ausführungsform der Erfindung werden mögliche Fehlstellen in der virtuellen dreidimensionalen Geometrie ermittelt und im Zuge des Umwandelns wird eine virtuelle dreidimensionale Geometrie der Fehlstellen ohne Aufnehmen weiterer räumlicher Informationen auf Basis der um die Fehlstellen liegenden Bereiche ermittelt. Dazu werden bestimmte Charakteristika der umliegenden Bereiche, wie Ihre Krümmung oder Abstände zur Bildebene, verwendet. Mittels dieser wird dann die virtuelle dreidimensionale Geometrie der Fehlstellen bevorzugt interpoliert und/oder extrapoliert.

Weitere bevorzugte Aus- und Durchführungsformen der Erfindung sind Gegenstand der übrigen Unteransprüche.

Die Erfindung wird in der Folge unter Bezugnahme auf die Zeichnungen weiter erläutert. Es zeigt:
- Fig. 1: eine beispielhafte Ausführungsform des erfindungsgemäßen Verfahrens,
- Fig. 2: eine beispielhafte Anwendung des erfindungsgemäßen Verfahrens,
- Fig. 3: eine visualisierte, zur Verfügung gestellte, virtuelle, dreidimensionale Geometrie aus einem ersten Blickwinkel,
- Fig. 4: die visualisierte, aktualisierte, virtuelle, dreidimensionale Geometrie von Fig. 3 nach einer Präparation,
- Fig. 5: die visualisierte, zur Verfügung gestellte, virtuelle, dreidimensionale Geometrie von Fig. 3 aus einem zweiten Blickwinkel
- Fig. 6: die visualisierte, aktualisierte, virtuelle, dreidimensionale Geometrie von Fig. 3 aus dem zweiten Blickwinkel.

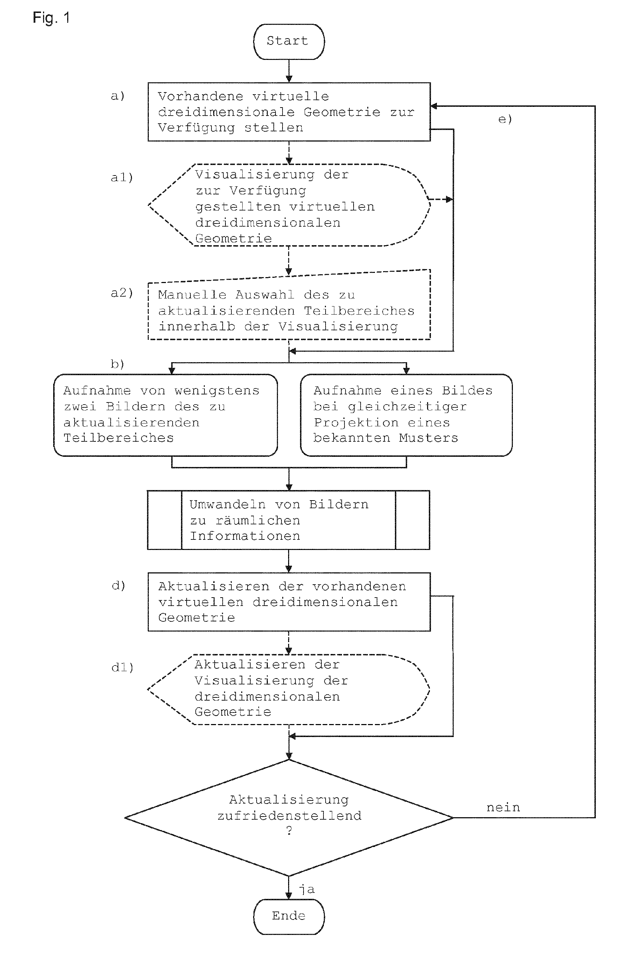

Die Fig. 1 zeigt eine erfindungsgemäße Ausführungsform des Ablaufes des Verfahrens. Dabei wird zunächst eine, beispielsweise aus einer früheren Aufnahme stammende, vorhandene, virtuelle, dreidimensionale Geometrie zur Verfügung gestellt. Diese kann optional bereits visualisiert werden. Wenn diese visualisiert wird, kann ebenfalls optional in der Visualisierung ein zu aktualisierender Teilbereich ausgewählt werden. Damit kann das Verfahren beschleunigt werden. Für die Funktionalität des Verfahrens ist dieser Schritt allerdings nicht zwingend erforderlich.

Dann wird der zu aktualisierende Teilbereich aufgenommen. Dies kann gemäß einer ersten Ausführungsform des Verfahrens erfolgen, indem ein Bild bei gleichzeitiger Projektion eines bekannten Musters aufgenommen wird. Die Art des Musters, also ob es sich dabei beispielsweise um ein regelmäßiges Streifenmuster oder ein Zufallsmuster handelt, ist dabei für die Erfindung nicht entscheidend, da es jedenfalls aufgrund der Oberflächenstruktur des aufzunehmenden Teilbereiches zu Verzerrungen des bekannten Musters kommt, aus denen sich räumliche Informationen über den zu aktualisierenden Teilbereich gewinnen lassen.

Alternativ können wenigsten zwei Bilder vorzugsweise gleichzeitig aufgenommen werden aus denen ebenfalls räumliche Informationen gewonnen werden.

Die gewonnenen räumlichen Informationen werden dann zur Aktualisierung der virtuellen, dreidimensionalen Geometrie verwendet. Optional kann diese dann ebenfalls visualisiert werden.

Ist die Aktualisierung zufriedenstellend, wird das Verfahren beendet. Kriterien dafür, ob die Aktualisierung zufriedenstellend ist, können dabei beispielsweise das Erreichen einer gewünschten Genauigkeit oder das vollständige Erfassen des zu aktualisierenden Teilbereiches sein. Letzteres Kriterium kann beispielsweise dann nicht erfüllt sein, wenn ein Aufnahmebereich eines Gerätes zum Aufnehmen der Bilder bzw. des Bildes, kleiner ist als der zur aktualisierende Teilbereich.

Wenn die Aktualisierung nicht zufriedenstellend ist, wird der Vorgang wiederholt. Die wie vorstehend beschrieben aktualisierte, virtuelle, dreidimensionale Geometrie ist dabei nun die vorhandene, zur Verfügung gestellte, virtuelle, dreidimensionale Geometrie.

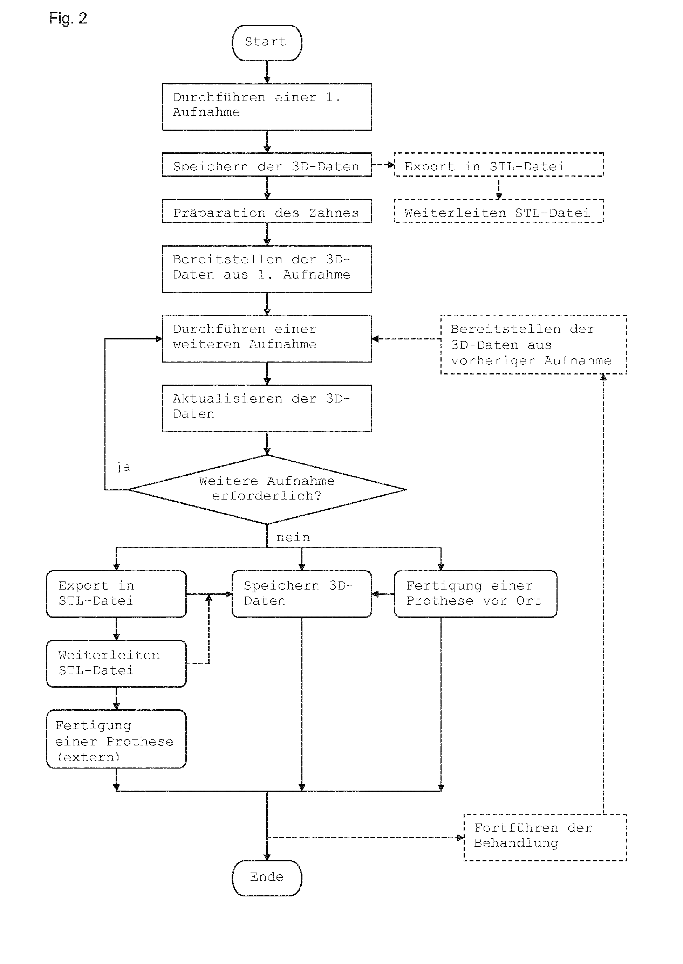

Die Fig. 2 zeigt einen beispielhaften Anwendungsfall des erfindungsgemäßen Verfahrens.

Dabei wird, beispielsweise bei einem Patienten, der sich in eine zahnmedizinische Behandlung begibt, zunächst eine erste Aufnahme durchgeführt. Mit dieser können beispielsweise räumliche Informationen der Zähne des Ober- und Unterkiefers des Patienten erfasst und zu einer virtuellen, dreidimensionalen Geometrie (im folgenden "3D-Daten") umgewandelt werden. Selbstverständlich kann auch von Anfang an nur ein Teilbereich des Mundraumes aufgenommen werden. Ebenso können neben den Zähnen auch möglicherweise bereits vorhandene Kronen, Zahnspangen, Implantate, Veneers oder Ähnliches als Teil der 3D-Daten aufgenommen werden.

Die 3D-Daten der ersten Aufnahme werden dann gespeichert, optional können sie außerdem in eine STL-Datei exportiert werden, um dann gegebenenfalls weitergeleitet zu werden. Das STL-Format ist dabei bevorzugt, da es sich um ein Open Source Format handelt, das in der Regel von allen Zahntechnischen Labors geöffnet werden kann. Diesen stehen durch das Weiterleiten die 3D-Daten über die Ausgangsituation des Patienten zur Verfügung.

In der Folge wird der Patient zahnmedizinisch behandelt. Dabei kann es sich, wie im Ausführungsbeispiels dargestellt, um die Präparation eines Zahnes, beispielsweise für eine Krone, handeln. Andere Arten der Behandlung sind selbstverständlich auch denkbar.

Zu einem späteren Zeitpunkt, beispielsweise direkt nach der Präparation, werden die 3D-Daten der ersten Aufnahme zur Verfügung gestellt. Der Zeitraum, der seit der ersten Aufnahme vergangen ist, spielt dabei für die Anwendung des erfindungsgemäßen Verfahrens keine Rolle. So kann beispielsweise auch ein Zeitraum von mehreren Wochen seit der ersten Aufnahme vergangen sein, wie es zum Beispiel bei Kontrollterminen für kieferorthopädische Maßnahmen der Fall sein kann.

Nach dem Bereitstellen der 3D-Daten wird eine erneute Aufnahme gemacht. Dabei kann sowohl erneut der gesamte ursprünglich aufgenommene Bereich aufgenommen werden, als auch nur ein Teilbereich, den man nach einer Änderung oder zur Kotrolle aktualisieren möchte. Änderungen umfassen dabei nicht nur die Ergebnisse zahnmedizinischer Behandlungen. Beispielsweise kann auch das natürliche Wachstum eines Weisheitszahnes und dessen Folgen auf das übrige Gebiss eine Änderung sein, die man in den 3D-Daten aktualisieren möchte.

Wenn weitere Aufnahmen erforderlich sind, beispielsweise um die Genauigkeit zu erhöhen, werden die letzten beiden Schritte des Verfahrens wiederholt. Sind keine weiteren Aufnahmen erforderlich, stehen dem Nutzer mehrere alternative Möglichkeiten zur Verfügung, die separat oder einander ergänzend durchgeführt werden können.

Zum Einen können die 3-Daten zu einer weiteren Verwendung einfach gespeichert werden. Zum Anderen kann, sofern die nötigen technischen Einrichtungen dafür vorhanden sind, vor Ort in der Zahnarztpraxis eine Prothese gefertigt werden.

Eine dritte Möglichkeit stellt ein Export in eine STL-Datei dar. Diese kann dann wieder weitergeleitet werden um eine Prothese in einem zahnmedizinischen Labor fertigen zu lassen.

Wenn die Behandlung fortgeführt werden soll, werden zu einem späteren Zeitpunkt die aktualisierten 3D-Daten erneut zur Verfügung gestellt und der Prozess kann ab der Aufnahme der Bilder bzw. des Bildes wiederholt werden. Andernfalls endet der Prozess.

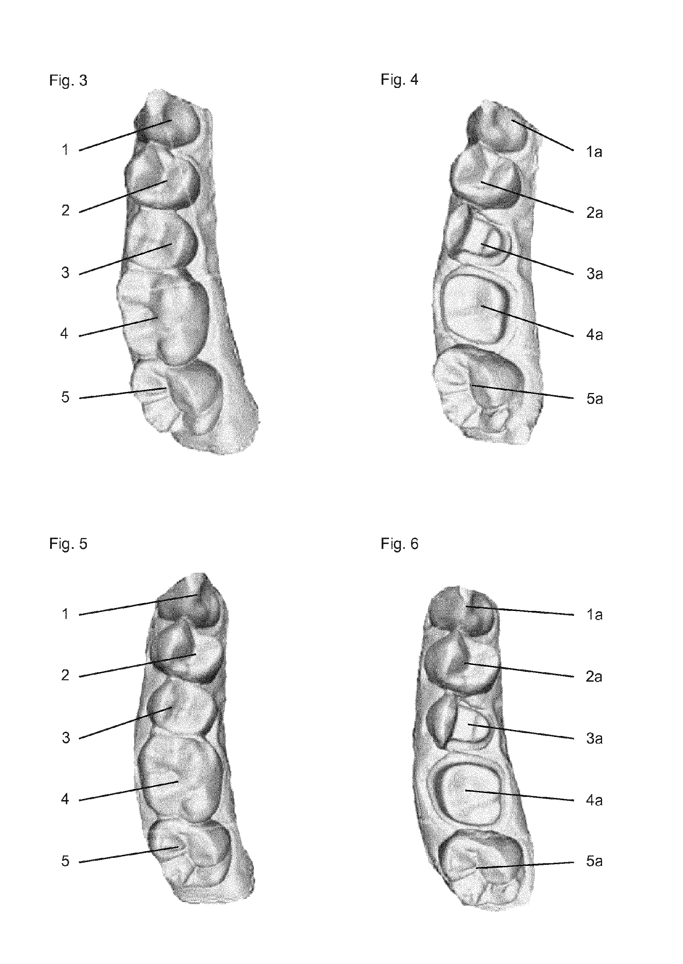

Die Fig. 3 zeigt eine visualisierte, zur Verfügung gestellte, virtuelle dreidimensionale Geometrie eines Kieferbogenabschnitts aus einem ersten Blickwinkel. Man kann in der Visualisierung fünf Zähne 1, 2, 3, 4, 5 erkennen. Die zur Verfügung gestellte Geometrie stammt dabei aus einer früheren Aufnahme. Die visualisierten Elemente sind dabei Zähne sowie der sie umgebende Mundraum mit dem Zahnfleisch. Es könnten sich aber auch bereits in der zur Verfügung gestellten Aufnahme weitere Elemente des Teilbereiches befinden, wie beispielsweise Kronen, Zahnspangen oder Ähnliches. Ein Element des Teilbereiches umfasst dabei grundsätzlich alles visuell Erfassbare und Aufnehmbare im Teilbereich.

Die Fig. 4 zeigt eine visualisierte, aktualisierte, virtuelle, dreidimensionale Geometrie des selben Teilbereiches wie in Fig. 3 aus dem selben Blickwinkel wie in Fig. 3. Man erkennt, dass Elemente des Teilbereiches verändert wurden. Im Dargestellten Beispiel wurden die ursprunglichen Zähne 3, 4 für das Anbringen von Zahnprothesen präpariert. Man kann an den Zähnen 3a, 4a deutlich erkennen, dass Substanz abgetragen wurde. Die Zähne 1a, 2a und 5a sind unverändert.

Die dargestellte Veränderung ist dabei lediglich ein Beispiel für eine Art der Veränderung. Selbstverständlich sind auch Veränderungen aufnehmbar, wie das Hinzufügen von Substanz, beispielsweise das Aufbringen einer Krone, oder einfach Lageänderungen von Elementen des Teilbereiches, beispielsweise nach einer kieferorthopädischen Korrektur von Zahnfehlstellungen.

Die Fig. 5 zeigt die visualisierte, zur Verfügung gestellte, virtuelle dreidimensionale Geometrie von Fig. 3 aus einem zweiten Blickwinkel. Die Änderung des Blickwinkels kann dabei aufgrund einer einfachen Eingabe eines Nutzers erfolgen und ist unabhängig von der Richtung aus der gegenwärtig Aufnahmen des Teilbereiches gemacht werden oder zu einem früheren Zeitpunkt gemacht wurden. Die Eingabe kann dabei beispielsweise über einfache, gegebenenfalls auf einem Display dargestellte, Bedienelemente erfolgen. Diese können beispielsweise über eine Computermaus oder auch über einen Touchscreen verwendbar sein.

Eine einfache rechnerische Veränderung des Blickpunktes im Raycasting um einen Blickwinkel zu verändern, ist aus dem Stand der Technik bekannt.

Die Fig. 6 zeigt die visualisierte, aktualisierte, virtuelle, dreidimensionale Geometrie von Fig. 4 aus dem Blickwinkel von Fig. 5. Die Änderungen im Zuge der Aktualisierung sind wiederum zu erkennen.

## Patentansprüche

1. Verfahren zum Aufnehmen wenigstens eines Teilbereiches einer dreidimensionalen Geometrie wenigstens eines Objektes, insbesondere eines Zahnes und/oder eines in den Mundraum gebrachten, organischen und/oder anorganischen Gebildes, beispielsweise eines Zahnimplantates, zum Zweck der Aktualisierung einer bereits vorhandenen virtuellen dreidimensionalen Geometrie des Teilbereiches, gegebenenfalls nachdem im Teilbereich befindliche Elemente des Objektes verändert, entfernt und/oder hinzugefügt wurden, wobei das Verfahren folgende Schritte beinhaltet:
a) zur Verfügung stellen der vorhandenen virtuellen dreidimensionalen Geometrie des Objektes, beispielsweise aus einer früheren Aufnahme,
b) Aufnahme von einem zweidimensionalen Bild, bei gleichzeitiger Projektion eines bekannten Musters auf den Teilbereich, aus dem räumliche Informationen der dreidimensionalen Geometrie des Objektes gewonnen werden,
c) automatisches Hinzufügen von gewonnenen räumlichen Informationen der dreidimensionalen Geometrie des Objektes zu gegebenenfalls bereits vorhandenenden räumlichen Informationen der virtuellen dreidimensionalen Geometrie des Objektes,
d) Aktualisieren der vorhandenen virtuellen dreidimensionalen Geometrie des Teilbereiches des Objektes aufgrund von hinzugefügten Informationen
e) gegebenenfalls Wiederholen des Vorgangs ab Schritt b).

2. Verfahren zum Aufnehmen wenigstens eines Teilbereiches einer dreidimensionalen Geometrie wenigstens eines Objektes, insbesondere eines Zahnes und/oder eines in den Mundraum gebrachten, organischen und/oder anorganischen Gebildes, beispielsweise eines Zahnimplantates, zum Zweck der Aktualisierung einer bereits vorhandenen virtuellen dreidimensionalen Geometrie des Teilbereiches, gegebenenfalls nachdem im Teilbereich befindliche Elemente des Objektes verändert, entfernt und/oder hinzugefügt wurden, wobei das Verfahren folgende Schritte beinhaltet:
a) zur Verfügung stellen der vorhandenen virtuellen dreidimensionalen Geometrie des Objektes, beispielsweise aus einer früheren Aufnahme,
b) Aufnahme von wenigstens zwei zweidimensionalen Bildern, aus denen räumliche Informationen der dreidimensionalen Geometrie des Objektes gewonnen werden,
c) automatisches Hinzufügen von gewonnenen räumlichen Informationen der dreidimensionalen Geometrie des Objektes zu gegebenenfalls bereits vorhandenenden räumlichen Informationen der virtuellen dreidimensionalen Geometrie des Objektes,
d) Aktualisieren der vorhandenen virtuellen dreidimensionalen Geometrie des Teilbereiches des Objektes aufgrund von hinzugefügten Informationen
e) gegebenenfalls Wiederholen des Vorgangs ab Schritt b).

3. Verfahren nach Anspruch 1 oder 2, **dadurch gekennzeichnet, dass** nach dem Schritt a) der Schritt
a1) Visualisierung der zur Verfügung gestellten, vorhandenen, virtuellen Geometrie mittels eines für den Nutzer einfach auslesbaren Mediums, beispielsweise eines Bildschirms erfolgt.

4. Verfahren nach Anspruch 3, **dadurch gekennzeichnet dass** nach dem Schritt a1) der Schritt
a2) manuelle Auswahl des zu aktualisierenden Teilbereiches aus der visualisierten virtuellen Geometrie erfolgt.

5. Verfahren nach einem der Ansprüche 1 bis 4, **dadurch gekennzeichnet, dass** nach dem Schritt d) der Schritt
d1) Aktualisieren der visualisierten dreidimensionalen Geometrie aufgrund der aktualisierten virtuellen dreidimensionalen Geometrie erfolgt.

6. Verfahren nach einem der Ansprüche 3 bis 5, **dadurch gekennzeichnet, dass** Hinzufügen und Visualisieren im wesentlichen in Echtzeit erfolgt.

7. Verfahren nach einem der Ansprüche 3 bis 6, **dadurch gekennzeichnet, dass** die Visualisierung Informationen zu einer Genauigkeit der erfassten virtuellen dreidimensionalen Geometrie enthält.

8. Verfahren nach einem der Ansprüche 3 bis 7, **dadurch gekennzeichnet, dass** der Visualisierung optische Hinweise zu empfehlenswerten Verbesserungen der Aufnahme für eine Bedienungsperson hinzugefügt werden, beispielsweise Richtungsangaben.

9. Verfahren nach einem der Ansprüche 3 bis 8, **dadurch gekennzeichnet, dass** die Visualisierung auf einem 3D-Bildschirm erfolgt.

10. Verfahren nach einem der Ansprüche 2 bis 9, **dadurch gekennzeichnet, dass** die Bilder als Sets von Bildern aufgenommen werden, wobei ein Set von Bildern jeweils aus wenigstens zwei überwiegend überlappenden Aufnahmen eines gleichen Aufnahmebereiches besteht.

11. Verfahren nach Anspruch 10, **dadurch gekennzeichnet, dass** die Sets von Bildern stereometrisch aufgenommen werden.

12. Verfahren nach Anspruch 1 bis 11, **dadurch gekennzeichnet, dass** abhängig vom Aufnahmebereich eines Gerätes zum Aufnehmen der Bilder, insbesondere der Sets von Bildern, akustische Signale zur Genauigkeit der erfassten virtuellen dreidimensionalem Geometrie gegeben werden.

13. Verfahren nach einem der Ansprüche 2 bis 12, **dadurch gekennzeichnet, dass** wenigstens während der Aufnahme ein Muster auf den Teilbereich projiziert wird.

14. Verfahren nach einem der Ansprüche 1 bis 13, **dadurch gekennzeichnet, dass** ein Zufallsmuster projiziert wird, wobei das Zufallsmuster aus zufällig verteilten, gegebenenfalls unregelmäßig geformten, Punkten und/oder Linien besteht.

15. Verfahren nach einem der Ansprüche 1 bis 13, **dadurch gekennzeichnet, dass** ein regelmäßiges Muster, beispielsweise ein Streifenmuster, projiziert wird.

16. Verfahren nach einem der Ansprüche 1 bis 15, **dadurch gekennzeichnet, dass** die aktualisierte virtuelle dreidimensionale Geometrie in ein Open Source Format, beispielsweise STL, umgewandelt wird.

17. Verfahren nach Anspruch 16, **dadurch gekennzeichnet, dass** mögliche Fehlstellen in der virtuellen dreidimensionalen Geometrie ermittelt werden und dass im Zuge des Umwandelns eine virtuelle dreidimensionale Geometrie der Fehlstellen ohne Aufnehmen weiterer räumlicher Informationen auf Basis der um die Fehlstellen liegenden Bereiche ermittelt wird.

18. Verfahren nach Anspruch 17, **dadurch gekennzeichnet, dass** die virtuelle dreidimensionale Geometrie der Fehlstellen mittels Interpolation und/oder Extrapolation ermittelt wird.
